# EUROPEAN PATENT SPECIFICATION

(11) **EP 2 601 775 B1**
(45) Date of publication and mention of the grant of the patent: **10.09.2014**
(21) Application number: 11718268.3
(22) Date of filing: 21.03.2011
(51) Int. Cl.: H04L 29/08

(54) **A METHOD FOR MANAGING PRESENCE INFORMATION**
VERFAHREN ZUR VERWALTUNG VON PRÄSENZINFORMATIONEN
PROCÉDÉ DE GESTION DE DATES DE PRÉSENCE

(30) Priority: 06.08.2010 ES 201001038
(43) Date of publication of application: 12.06.2013
(73) Proprietor: Telefónica, S.A., 28013 Madrid (ES)
(72) Inventor: FULLEA CARRERA, Eduardo, E-28013 Madrid (ES); GÓMEZ, Bienvenido, E-28013 Madrid (ES); NÚÑEZ DIAZ, José Luis, E-28013 Madrid (ES); SÁNCHEZ DASI, José Juan, E-28013 Madrid (ES)
(74) Representative: Carlos Hernando, Borja
(86) International application number: PCT/EP2011/001372
(87) International publication number: WO 2012/016601

(56) References cited:
- EP-A1- 1 806 903
- US-A1- 2006 053 379
- GSM ASSOCIATION: "RICH COMMUNICATION SUITE. RELEASE 1. TECHNICAL REALIZATION 1.2.", GSMA RCS, 25 February 2010 (2010-02-25), pages 1-41, XP000002658057,

## Description

### Field of the art

The present invention generally relates to a method for managing presence information allowing a user to active a hyper-availability status, and more particularly to a method which allows said user to also provide an indication to a caller about one or more service and/or communication means that the user is willing to be contacted through when in said hyper-availability status.

### Prior State of the Art

With the popularity of instant communication tools (mainly the instant messaging communities all around the internet) and as long as the "always-on" paradigm starts to be a reality, users have learnt to actively use the presence information (understood as the information about the availability status of a particular user) of their peers in the network in order to increase the communication process effectiveness.

From the users' perspective, presence information usually consists of the status, which have meaning about the acceptance of communication sessions and is set by the service itself when the users log into the service, and eventually some additional free text set by the users to inform their peers about their feelings or thoughts (as a kind of emotional extra information and with no impact in the behaviour of the services).

Additionally, some service suites have defined a new concept of hyper-availability meaning a condition that enable users to proactively set a kind of temporary "Contact me" status. This status allows a certain user to inform those contacts with which a Social Presence Relationship has been established, that users are currently in a situation where it is possible to communicate more freely (for example in a waiting room), and that they are willing to communicate "right now".

### Technical Background / Existing Technology

The Open Mobile Alliance bases the concept of presence and its standard enabler OMA Presence SIMPLE [9] in several RFCs approved by the IETF:
- RFC 3863 [1] defines the Presence Information Data Format (PIDF), including definition for PRESENCE INFORMATION, PRESENCE TUPLES and STATUS.
- RFC 2778 [2] defines a model for describing systems that provide presence information.
- RFC 2779 [3] defines a minimal set of presence status values defined by the IMPP Model document [RFC2778], allowing for existing other values of STATUS different from OPEN and CLOSE that do not imply anything about communication session acceptance.
- RFC 4479 [4] defines how to take real-world systems and map them into presence documents as an extension to RFC 3863.
- RFC 4480 [5] defines additional presence attributes to describe person, service, and device data elements.

Additionally, the GSMA's Rich Communication Suite (RCS) will provide a feature-rich portfolio of IP Multimedia Subsystem (IMS) based communication services providing presence and capability indications, rich call and rich messaging. The Service Definition [6] includes hyper-availability among the use cases of RCS and it is handled as an attribute for the Social Presence Information [7] including in a *presentity,* (i.e. the entity -in this case the user- the presence information is about). So that, RCS enables users to discover and make use of the following functionalities (among other things):
- Emit a time limited hyper-availability alert to authorized contacts (with the possibility for the user to deactivate it)
- Be notified of updates and hyper-availability alerts made by enriched contacts

In addition, the RCS Technical Realization ([8], Sec. 4.2.2), establishes that hyper-availability information is carried by the OMA Overriding Willingness combined with an "until" value as specified in [10], with element "basic->open".

### Problems with existing solutions

There are a lot of documents, specifications and solutions managing presence information, but only a few deal with the hyper-availability concept as a very dynamic and volatile attribute of the presence information.

Regarding specifically with hyper-availability, current specifications include it as an attribute inside the Social Presence Information, including in the presence document under the person node an element like:
<op:overriding-willingness opd:until="2008-10-28T21:00:00Z">
<op:basic>open</op:basic>
</op:overriding-willingness>
The above example uses next XML namespaces:
- *xmlns:op="urn:oma:xml:prs:pidf:oma-pres"*
- *xmlns:opd="urn:oma:xml:pde:pidf:ext"*

From a user' perspective, it means that hyper-availability is global for the user and affects to every available service (regarding capability information). He/she can only say *"Contact me right now"* to their peers. This is not flexible enough for seamless communications as we can see in the next situation, where users A and B are supposed to share their Social Presence Information:
1. A is attending a boring conference. He see some of his peers as connected but he don't want bother them by directly sending an instant message. So he sets his hyper-availability to active expecting that some of them start a chat with him.
2. B receives a NOTIFY with A's hyper-availability active.
3. B decides contact A and chooses to call B.
4. A's phone starts ringing, bothering the rest of attendants.

In this situation, it would be desirable that A said *"Please, anybody wants start* a *chat with me right now?' when* he set his hyper-availability to active. Regarding current specifications, this is not an option.

Others presence management system allow user A (the one publishing their presence status) to set communications means, terminals or even more complex rules in order to let users contact them (the users watching the A's presence status) whenever they were connected. These rules are always pre-defined as criteria and preferences to be contacted and they usually include some scheduling time-table (for instance, I don't want to receive incoming calls at night).

In these static solutions for managing presence information, users can decide when they want to be contacted by their peers (by setting their hyper-availability to active at that time) but they can't dynamically select how they want their peers to contact them (the service or communication mean).

WO01/45342 discloses a presence management system which provides information about availability of a watched contact to a watching party. In this availability information, the mode of communication preferred by the user at different times of the day is included (see page 46, lines 1-2).

In WO01/45342, the user can select which communication mean/service they want their contacts to contact him depending on the time of the date, but this selection is not done every time when he sets his hyper-availability status to active, but the selection is a static selection, as is done in advance inputting to the system the users criteria and preferences.

Patent application US 2006/0053379 discloses an interface that allows presence settings associated with a communication mode.

### Current implementation of hyper-availability

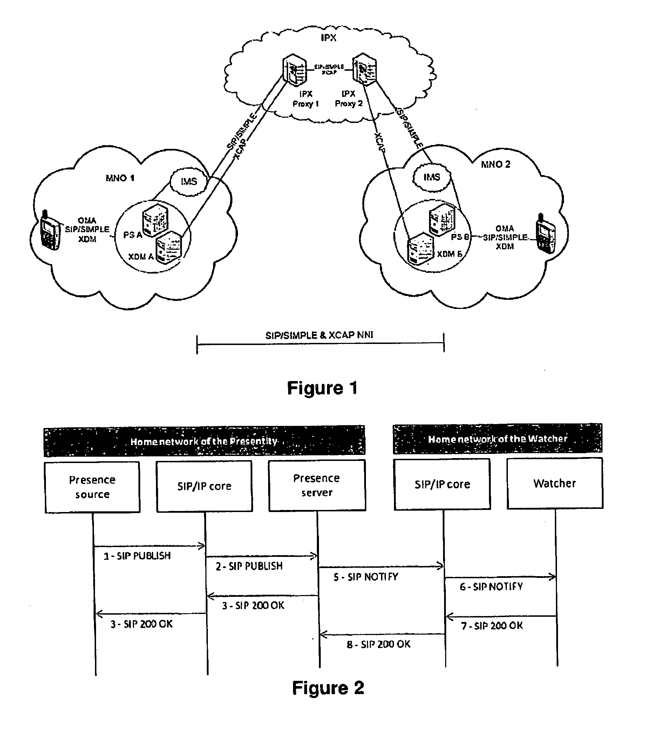

As far as hyper-availability is a new status delivered as part of the Presence Information, next figure shows hyper-availability architecture based on the OMA Presence SIMPLE Enabler [9] specification and used for presence and capability discovery in RCS [8]. An architecture of Presence as a part of RCS for delivering hyper-availability is illustrated in Fig. 1.

The users interact with IMS elements (IMS core, Presence Server and XDM enabler) in their home networks following the next flow, which is illustrated in Fig. 2:
1. The Presence source (i.e. the user who set his/her hyper-availability status) generates a SIP PUBLISH request, which contains a presence document.
2. The SIP/IP core routes the request to the correct PS.
3. The PS authorizes the presence publication, and checks the information the message contains. The PS then processes it and composes the Presence Information to the Presentity's presence document. The PS sends a SIP 200 (OK) response back to the SIP/IP Core.
4. The SIP/IP Core forwards the response back to the Presence Source.
5. The PS determines which authorized Watchers are entitled to receive the updates of the Presence Information for this Presentity. For each appropriate Watcher, the PS generates a SIP NOTIFY request that contains the hyper-availability status as an update of the Presence Information.
6. The SIP/IP Core forwards the SIP NOTIFY request to the Watcher.
7. The Watcher acknowledges the SIP NOTIFY request with a SIP 200 (OK) response to its SIP/IP Core.
8. The SIP/IP Core of the Watcher forwards the SIP 200 (OK) response to the PS.

The Watcher is supposed to be properly subscribed to the Presentity's Presence Information State Changes

### Description of the Invention

It is necessary to offer an alternative to the state of the art which covers the gaps found therein.

To that end, the present invention provides a method for managing presence information according to claim 1.

Unlike the known proposals, the method of the invention further comprises selecting, by said user, one or more services and/or communication means he wants his peers be enabled to contact him through, when at said hyper-availability status.

For an embodiment the method of the invention comprises associating the service or services and/or communication means selection to said hyper-availability status.

According to an embodiment, the method comprises carrying out said association, when related to the service selection, by means of activating said hyper-availability status correlated to a specific service.

### Advantages of the Invention

The present invention allows a more flexible framework for hyper-availability where users can fine-tune the communication mean/service they want their contacts to contact them.

Setting a service hyper-availability status can be understood like (and also implements like) broadcasting an invitation to start a new session for a specific service. However, although this approach (send an INVITE message to start a new session for a service to a peer) can be also valid in order to establish a new session between two peers, mechanism based on presence updates is more efficient when user are not inviting a specific peer, but any of his/her connected peers at that moment. Without service hyper-availability, user should send as many INVITE messages as peers of him/her were connected, while implementing service-hyper-availability, an only PUBLISH message is needed to reach all the peers at the same time.

In addition to efficiency, presence-update-based method enables users (both the one who sets his/her hyper-availability and his/her peers) to keep a fine-control about who and how receives the notification since notification follows subscription and authorization rules defined for every presence notifications.

From the user point of view, this flexibility allows users to enjoy a better experience and mainly to attain better performances of the hyper-availability status when using communication services. When they set the hyper-availability to active, they keep a fine-control of the communication means they ask their peers to contact them back right now, discouraging undesirable attempts that bother them and preventing signalling traffic from being wasted in order to establish sessions by means not desired by the users.

### Brief Description of the Drawings

The previous and other advantages and features will be more fully understood from the following detailed description of embodiments with reference to the attached drawings, which must be considered in an illustrative and non-limiting manner, in which:
Fig. 1 is an architecture of presence as a part of RCS for delivering hyper-availability;
Fig. 2 is a messages flow for delivering hyper-availability;
Fig. 3 is a schematic diagram which represents the delivery of service hyper-availability, according to an embodiment of the method of the invention; and

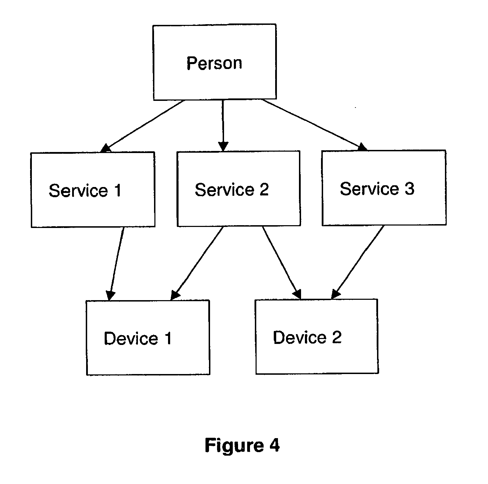

Fig. 4 represents schematically a example of Presence Information Data Model were a Presentity has presence information related to Service 1, Service 2 and Service 3, which are consumed atDevice 1 and Device 2.

### Detailed Description of Several Embodiments

The service hyper-availability links hyper-availability to the service instead of the person elements in the presence schema.

The following example of using or use case is detailed in order to illustrate the invention. Users A and B are supposed to be registered at the Presence Server, share their Social Presence Information and be available at the service 1.
1. At a specific point of time A sets his hyper-availability status to active for the service 1.
2. A's client publishes service 1 hyper-availability as a presentity update to the Presence Server.
3. The presence server notifies the A presence update (i.e. A service 1 hyper-availability) to all authorized peers
4. B (the rest of A's peers too) receives a NOTIFY with A hyper-availability active for the service 1.
5. B decides to start a session for the service 1 with A.
6. A receives the request for a session for the service 1 with B.
7. A accepts the request.
8. A and B start the session.

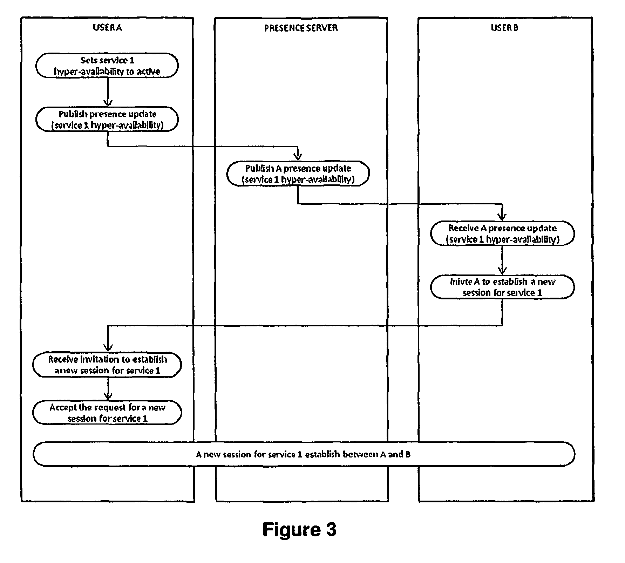

This use case is depicted in Figure 3, where the left column represents User A's client, comprising the presence client (presence source and watcher) and the service client; the right column represents User B's client, with the same components; and the column in the middle represents the Presence Server.

In order to illustrate and better understand the invention, one can suppose an online gaming service as the service 1. So, when A set his/her hyper-availability to active for the online gaming service is asking to their peers to have a game right now. B feels like having a game right now with A sounds like a great idea, so launch his/her gaming app and start a game against A. A and B start playing.

Client's behaviours and processes to manage, publish, send, spread and handle service hyper-availability in the network remain unaffected regarding the ones defined for standard hyper-availability (As defined in RCS Functional Description document sec. 2.1.3.1 [7]), excepting the following minor changes:
- On the presentity's side (the user who publishes the hyper-availability status for service 1), the user has to select one or more services for being contacted back when he sets his hyper-availability status to active.
- On the watcher's side (the user receiving a NOTIFY with service hyper-availability information for user A) the client should temporary (up to the specified "until" time) highlight in the contact entry for user A in the address book the services capabilities affected by the service hyper-availability in order to foster that the watcher contact user A back through them (he/she is indeed requesting to be contacted using those services).

In order for the user to select said one or more services and/or communication means, for an embodiment of the invention the method comprises, after said user has set said hyper-availability status to active, offering a list of possible services and/or communication means to said user and selecting, by said user, at least one of the offered services and/or communication means.

Said list is offered to the user, for an embodiment, through a display of a computing device, such a mobile device, and said selection is carried out by the user by operating input means of said computing device.

As for the referred highlighting, on the watcher's side, the method comprises, for an embodiment, carrying it out, for a determined time, in respective displays of computing devices of said peers or watchers, in a contact entry for said user or presentity in an address book.

Next some embodiments of implementations of the service hyper-availability concept according to the method of the invention are expounded.

### Embodiment - Option 1

One of the options for implementation of the service hyper-availability in SIMPLE is to use the "until" attribute as an attribute of the <status> element as part of the tuple component for a service according to the presence data model [1]. This is illustrated in the following presence tuple, where XML namespace op follows *xmlns:op="urn:oma:xml:prs:pidf:oma-pres":*

```
               <tuple id="bs35ra">
              <status until:"2010-04-02T22:00:01">
                     <basic>open</basic>
              </status>
                     <op:service-description>
                     <op:service-id>org.openmobilealliance:IM-
                     session </op:service-id >
                     <op:version>1.0</op:version>
                     </op: service-description>
                     <contact>tel: +1234578901 </contact>
              </tuple>
```

This implementation can be problematic in terms of backward compatibility as the "until" attribute is not allowed for <status> elements and may be an issue for legacy clients not supporting this feature. For this reason this option is not the most highly recommended.

### Embodiment - Option 2

One of the options for implementation of the service hyper-availability is to combine the regular hyper-availability indication specified by RCS (i.e. use the until attribute at the <overriding-willingness> element), with service-specific hyper-availability indication. This can be done by using the "until" attribute as an attribute of the <willingness> element as part of one or more <tuple> components related to a service, according to the presence data model extensions by OMA [10]. The value of the different until attribute should be the same.

This is illustrated in the following presence tuple, where XML namespace op follows xmlns:op="urn:oma:xml:prs:pidf:oma-pres":

```
              <op:overriding-willingness opd:until="2010-04-02T22:00:01">
                  < op: basic>open </op:basic>
              </op:overriding-willingness>
              [...]
               <tuple id="bs35ra">
              <status>
                     <basic>open</basic>
              </status>
                  <op:wlllingness until:"2010-04-02T22:00:01">
                  <op:basic>open</op:basic>
                  </op:willingness>
                  <op:service-description>
                  <op:service-id>org.openmobilealliance:IM-
                  session</op:service-id >
                  <op:version>1.0</op:version>
                  </op:service-description>
                  <contact>tel:+1234578901</contact>
              </tuple>
```

This implementation is fully aligned with the Presence Data Model specified by OMA Presence Information Data Model. Nevertheless the application specific willingness (<willingness> under the <tuple> element) has not been included so far in the RCS implementation guidelines).

This is not a problem in terms of backward compatibility as the RCS clients shall ignore unrecognized elements. Moreover RCS clients not supporting service-specific hyper-availability will still support the regular coarse-grained hyper-availability. On the other hand clients supporting service-specific hyper-availability will just show the user "hyper-available" at the specific services he/she has selected.

For those reasons this is the preferred implementation.

### Embodiment - Option 3

Regarding the <status> element (as part of the tuple component for a service according to the presence data model [1]), as saying in RFC3863, Sec 4.2.4 [1], other status values than open or closed for the <basic> element are possible using the standard namespace-based extensibility rules defined in the document. Applications encountering unrecognized elements within <status> may ignore them. So, it is possible to add a new element noting hyper-availability under the status element, for instance, the <hyper> element set to "open" and with the "until" attribute set to the same value as in the <overriding-willingness> element. This is illustrated in the following presence tuple , where XML namespace op follows *xmlns:op="urn:oma:xml:prs:pidf:oma-pres"*

In addition the regular hyper-availability indication specified by RCS (i.e. use the until attribute at the <overriding-willingness> element) is kept to maximize backwards compatibility:

```
              <op:overriding-willingness opd:until="2010-04-02T22:00:01">
                  <op:basic>open</op:basic>
              </op:overriding-willingness>
              [...]
               <tuple id="bs35ra">
              <status>
                      <basic>open</basic>
                      <hyper until:"2010-04-02T22:00:01">open</hyper>
               </status>
                     <op:service-description>
                     <op:service-id>org.openmobilealliance:IM-
                     session</op:service-id>
                     <op:version>1.0</op:version>
                     </op:service-description>
                     <contact>tel:+1234578901</contact>
               </tuple>
```

In this example, the user is setting his/her hyper-availability status to active for the service IM until the next 2nd of April 2010 at 22:00:01. So, he/she is telling his/her peers to start a chat session with him.

This implementation should not cause any kind of issue for legacy clients not supporting this feature. For this reason this option is also highly recommended.

### Embodiment - Option 4

Following the same extension model explained in option 3, service hyper-availability can be also implemented by extending the value of the <basic> element for the element <overriding-willingness> which is part of the "person" component.
In this case, values for the new element should be <service-id> elements, as many as services where user wants to set his/her hyper-availability to active, meaning that hyper-availability status only affects to those service. The following presence tuple (in this case a "person" component) will result in the same actions than the previous one:

```
             <pdm:person id="a1233">
                  <op:overriding-willingness opd:until="2008-10-
                  28T21:00:00Z">
                      <op:basic>open</op:basic>
                      <op:service-id>org.openmobilealliance:IM-
                      session </op:service-id>
                  </op:overriding-willingness>
                  <rpid:status-icon
                  opd:etag="26362">http://xcap.gsma.org/xcap-ap
                  service/org.openmobilealliance.pres-
                  content/users/sip:1234578901@gsma.org/oma_status-
                  icon/rcs_status_icon</rpid:status-icon>
                  <c:homepage>http://example.com/∼alice</c:homepage>
                  <pdm:note>I'll be PAG</pdm:note>
              </pdm:person>
```

This example uses next XML namespaces:
- *xmlns:op="urn:oma:xml:prs:pidf:oma-pres"*
- *xmlns:rpid="urn:ietf:params:xml:ns:pidf:rpid"*
- *xmlns:c="urn:ietf:params:xml:ns:pidf:cipid"*
- *xmlns:pdm="urn:ietf:params:xml:ns:pidf:data-model"*

The combination of presence attribute values in this implementation of the invention should not interfere with the current use of the *<willingness><basic>* attribute, whose common use is limited to the case when the *<status><basic>* attribute is *open,* to indicate the desire to receive incoming communication requests for the specified service. According to the previous rationale this implementation can also be regarded as backward compatible with existing implementations. For these reasons this is also a valid embodiment option together with the two previous ones.

A person skilled in the art could introduce changes and modifications in the embodiments described without departing from the scope of the invention as it is defined in the attached claims.

### Acronyms and Abbreviations

- GSMA: GSM (Global System for Mobile Communications) Association
- IETF: Internet Engineering Task Force
- IM: Instant Messaging
- IMPP: Instant Messaging and Presence Protocol
- IMS: IP (Internet Protocol) Multimedia System
- OMA: Open Mobile Alliance
- PIDF: Presence Information Data Format
- RFC: Request For Comments
- RCS: Rich Communication Suite
- SIP: Session Initiation Protocol
- SIMPLE: Session Initiation Protocol for Instant Messaging and Presence Leveraging Extensions
- SPI: Social Presence Information
- XMPP: extensible Messaging and Presence Protocol

### References

[1] Sugano, H et al. RFC 3863: Presence Information Data Format (PIDF). August 2004.
[2] Day, M. et al. RFC 2778: A Model for Presence and Instant Messaging. February 2000.
[3] Day, M. et al. RFC 2779: Instant Messaging / Presence Protocol Requirements. February 2000.
[4] Rosenberg, J. et al. RFC 4479: A Data Model for Presence. July 2006.
[5] Schulzrinne, H. et al. RFC 4480: RPID: Rich Presence Extensions to the Presence Information Data Format (PIDF). July 2006.
[6] GSM Association. Rich Communication Suite. Release 3. Service Definition 1.0. 25th February 2010.
[7] GSM Association. Rich Communication Suite. Release 1. Functional Description 1.2. 25th February 2010.
[8] GSM Association. Rich Communication Suite. Release 1. Technical Realization 1.2. 25th February 2010.
[9] OMA PRESENCE SIMPLE V 2.0 Candidate Enabler Release. (2009-09-17)
[10] OMA Presence SIMPLE Data Extensions V1.0 Approved Reference Release (2009-09-29). Presence SIMPLE Data Specification (OMA-DDS-Presence_Data_Ext-V2_0-20090929-A)

## Claims

1. A method for managing presence information, comprising:
- setting by a user an availability status to active in a presence service by means of selecting this status in a presence client at a user's computing device; and
- selecting by said user at least one service and/or communication means he/she wants a peer to contact him/her through, when at said availability status;
**characterized in that** the method further comprises:
- modifying by said user, said availability status to an hyper-availability status in which he/she is querying to be contacted by his/ her peers at that precise moment;
- offering said user a list of possible services and/or communication means to go through; and
- activating said hyper-availability status correlated to at least one of said possible offered services and/or communication means;
wherein said activating of the hyper-availability status correlated to said at least one offered service and/ or communications means by said user is performed by sending a SIP PUBLISH message, including said correlation, to a presence server as a presentity update, said presence server sending a SIP NOTIFY message, including said correlation, to authorized peers.

2. A method according to claim 1 wherein said availability status is set for a determined given period of time.

3. A method according to claim 2, wherein said period of time is signalled by an end time from said precise moment.

4. A method as per claim 1, wherein said list is offered to the user through a display of a computing device, and said selection is carried out by the user by operating input means of said computing device.

5. A method as per any of the previous claims, wherein it comprises highlighting, for a determined time, in respective displays of computing devices of said peers, in a contact entry for said user in an address book, some services capabilities affected by the service hyper-availability selection.

## Patentansprüche

1. Verfahren zum Verwalten von Präsenzinformationen, umfassend:
- Einstellen auf aktiv eines Verfügbarkeitsstatus durch einen Nutzer in einem Präsenzdienst durch Auswählen dieses Status in einem Präsenzclient in einem Computergerät des Nutzers; und
- Auswählen durch den genannten Nutzer zumindest einer Dienstleistung und/oder eines Kommunikationsmittels, über welche(s) er/sie wünscht, von einem Peer kontaktiert zu werden, wenn er sich im genannten Verfügbarkeitsstatus befindet;
**dadurch gekennzeichnet, dass** das Verfahren weiterhin Folgendes umfasst:
- Ändern durch den genannten Nutzer des genannten Verfügbarkeitsstatus auf einen Hyperverfügbarkeitsstatus, in welchem er/sie eine Anfrage stellt, um von seinem/ihren Peers in genau jenem Moment kontaktiert zu werden;
- Angebot an den Nutzer einer Liste von möglichen Dienstleistungen und/oder Kommunikationsmitteln, auf welche er zugreifen kann; und
- Aktivieren des genannten Hyperverfügbarkeitsstatus, welcher mit zumindest einer/einem der genannten möglichen angebotenen Dienstleistungen und/oder Kommunikationsmitteln korreliert;
wobei das genannte Aktivieren durch den genannten Nutzer des Hyperverfügbarkeitsstatus, welcher mit der/dem genannten zumindest einen angebotenen Dienstleistung und/oder Kommunikationsmittel korreliert, durch Senden einer SIP-PUBLISH-Nachricht einschließlich der genannten Korrelation als ein Präsenzupdate an einen Präsenzserver durchgeführt wird, wobei der genannte Präsenzserver eine SIP-NOTIFY-Nachricht einschließlich der genannten Korrelation an berechtigte Peers sendet.

2. Verfahren nach Anspruch 1, wobei der genannte Verfügbarkeitsstatus für einen bestimmten gegebenen Zeitraum eingestellt wird.

3. Verfahren nach Anspruch 2, wobei der genannte Zeitraum durch eine Endzeit in Bezug auf den genannten genauen Moment signalisiert wird.

4. Verfahren nach Anspruch 1, wobei die genannte Liste dem Nutzer durch ein Display eines Computergeräts dargeboten wird, und das genannte Auswählen vom Nutzer durch das Bedienen von Eingabemitteln des genannten Computergeräts ausgeführt wird.

5. Verfahren nach einem der vorherigen Ansprüche, wobei es ein Hervorheben von einigen Dienstleistungsfähigkeiten, welche von der Auswahl der Dienstleistungshyperverfügbarkeit betroffen sind, während einer bestimmten Zeit in jeweiligen Displays von Computergeräten der genannten Peers bei einer Kontakteingabe für den genannten Nutzer in ein Adressbuch umfasst.

## Revendications

1. Procédé pour gérer des informations de présence, comprenant :
- définition par un utilisateur d'un statut de disponibilité pour activer dans un service de présence aux moyens de sélection de ce statut en présence d'un client dans un dispositif informatique d'un utilisateur ; et
- sélection par ledit utilisateur d'au moins un service et/ou moyens de communication via lequel il/elle souhaite qu'un pair le/la contacte, quand il se trouve dans ledit état de disponibilité ;
**caractérisé en ce que** le procédé comprend ci-après :
- modification par ledit utilisateur, dudit statut de disponibilité à un statut d'hyper-disponibilité dans lequel il/elle désire être contacté par son pair à un moment précis ;
- propose audit utilisateur une liste de services possibles et/ou des moyens de communication à utiliser ; et
- activation dudit statut d'hyper-disponibilité en corrélation avec au moins l'un desdits services possibles proposés et/ou moyens de communication ; dans lequel ladite activation du statut d'hyper-disponibilité en corrélation avec au moins l'un desdits services possibles et/ou moyens de communication par ledit utilisateur s'effectue en envoyant un message SIP PUBLISH, notamment ladite corrélation, à un serveur de présence comme une mise à jour presentity, ledit serveur de présence envoyant un message SIP NOTIFY, notamment ladite corrélation, aux pairs autorisés.

2. Procédé selon la revendication 1 dans lequel ledit statut de disponibilité est activé pour une période de temps déterminé donnée.

3. Procédé selon la revendication 2, dans lequel ladite période de temps est signalée par une heure du fin à partir dudit moment précis.

4. Procédé selon la revendication 1, dans lequel ladite liste est proposée à l'utilisateur à travers un écran d'un dispositif informatique, et ladite sélection est effectuée par l'utilisateur en opérant des moyens de saisie dudit dispositif informatique.

5. Procédé selon l'une quelconque des revendications précédentes, dans lequel il comprend la mise en évidence , pour un temps déterminé, dans des paramètres respectifs des dispositifs informatiques desdits pairs, dans une entrée de contact pour ledit utilisateur dans un carnet d'adresse, des capacités de service attribuées à la sélection du service d'hyper-disponibilité.
